Europäisches Patentamt

European Patent Office

Office européen des brevets

(19)

(11) **EP 0 966 131 A2**

(12) **EUROPÄISCHE PATENTANMELDUNG**

(43) Veröffentlichungstag:
22.12.1999 Patentblatt 1999/51

(51) Int. Cl.$^6$: **H04L 27/02**

(21) Anmeldenummer: 99108998.8

(22) Anmeldetag: 06.05.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 15.06.1998 DE 19826253

(71) Anmelder: **ABB PATENT GmbH**
68309 Mannheim (DE)

(72) Erfinder:
• Lehmann, Klaus, Prof. Dr.-Ing.
91315 Höchstadt/Aisch (DE)

• Fuchs, Rainer, Dipl.-Ing.
97529 Vögnitz (DE)
• Maul, Rainer, Dipl.-Ing.
96160 Geiselwind (DE)
• Wimmer, Stefan, Dipl.-Ing.
96149 Breitengüssbach (DE)
• Kartmann, Peter, Dipl.-Ing.
91080 Uttenreuth (DE)

(74) Vertreter: **Miller, Toivo et al**
**ABB Patent GmbH**
**Postfach 10 03 51**
**68128 Mannheim (DE)**

(54) **Verfahren zur bandbreiteneffizienten Mehrfrequenz-Datenübertragung**

(57) Die Erfindung bezieht sich auf ein Verfahren zur bandbreiteneffizienten Mehrfrequenz-Datenübertragung. Die sendeseitige Bildung eines Einseitenbandsignals (x(t)) erfolgt durch Zuordnung einer Kreisfrequenz ($\omega_v$) zu einem Datensignal ($v$(t)), das durch seine Amplitude, Frequenz oder Phase gekennzeichnet ist. Durch Addition der Kreisfrequenz ($\omega_v$) zu einer gewählten Trägerkreisfrequenz ($\omega_0$) erfolgt eine Anpassung an den Datenkanal. Empfangsseitig wird das empfangene Signal (x(t)) in einen ersten und einen zweiten Kanal aufgeteilt. In den beiden Kanälen erfolgt eine Modulation mit einem Modulationssignal der Form $\cos((\omega_0+\Delta\omega)t+\alpha)$, bzw. $\sin((\omega_0+\Delta\omega)t+\alpha)$, wobei $\alpha$ eine beliebige Phasenverschiebung ist. In beiden Kanälen werden zwei orthogonale Signale gebildet und daraus das Datensignal ($v$(t)) ermittelt.

Fig. 2

# Beschreibung

Die Erfindung betrifft ein Verfahren zur bandbreiteneffizenten Mehrfrequenz-Übertragung von Daten, beispielsweise über Kabel, Lichtleiter oder Funk.

Als bandbreiteneffiziente Übertragungsverfahren sind Verfahren bekannt, bei denen geeignet gefensterte FSK-Signale (Frequency Shift Keying) durch Zuhilfenahme orthogonal erzeugter Signalkomponenten übertragen und empfangsseitig demoduliert werden. Eine Möglichkeit, eine zum normalen Signal orthogonale Komponente zu erzeugen, um bei der Demodulation die Bandbreiteneffizienz zu erhöhen, besteht in der Anwendung der bekannten Hilbert-Transformation. Untersuchungen haben aber gezeigt, daß für den Fall, daß die Einschaltdauer der einzelnen Frequenzen zur Erhöhung der Datenrate stark reduziert wird, die Bildung des Orthogonalsignals mit der Hilbert-Transformation - wegen langen Ein- und Ausschwingzeiten - unbefriedigend wird.

Der Erfindung liegt daher die Aufgabe zugrunde, ein Verfahren zur bandbreiteneffizienten Mehrfrequenz-Datenübertragung anzugeben, bei dem hilberttransformierte Signalkomponenten verwendet werden, ohne eine aufwendige Hilbert-Transformation durchführen zu müssen.

Diese Aufgabe wird durch ein Übertragungsverfahren mit den im Anspruch 1 angegebenen Merkmalen gelöst. Ausgestaltungen des Verfahrens sind in weiteren Ansprüchen angegeben.

Das Verfahren weist insbesondere nachstehende Vorteile und Merkmale auf:

Das Verfahren arbeitet in der sogenannten Einseitenbandtechnik, d. h. auf der Sendeseite werden zu hart getasteten Sinus- oder Cosinussignalen mit bei Bedarf zusätzlich beeinflußter Amplitude und / oder Phase ($\pm\pi$) die Orthogonalsignale ohne die aufwendige Hilberttransformation erzeugt.

Durch eine orthogonale Modulation mit harmonischen Trägern kann das erzeugte Frequenzband beliebig in einem Übertragungskanal verschoben werden.

Je mehr Information (mehr Frequenzen, Amplituden, Phasenumtastung) in das Sendespektrum gelegt werden, um so mehr geht das erforderliche Frequenzband in die Höhe (Amplitude) und nicht in die Breite (Frequenzbandbreite). Die einzelnen Frequenzen überlappen sich immer mehr.

Im Sendespektrum ist in aller Regel eine Trennung der einzelnen Anteile durch frequenzselektive Maßnahmen nicht mehr möglich.

Die Demodulation im Empfänger erfolgt zeitselektiv (Draufsicht auf das Kurzzeitspektrum) durch Berechnung der momentanen Länge des komplex gewordenen Zeigers nach

$$\sqrt{v(t)^2 + \hat{v}(t)^2}$$

und der momentanen Winkelgeschwindigkeit

$$\dot{\varphi}(t) = \frac{d}{dt} \arctan \frac{\hat{v}(t)}{v(t)}$$

bzw.

$$\widetilde{\dot{\varphi}}(t) = \frac{d}{dt} \arctan \frac{v(t)}{\hat{v}(t)},$$

abhängig davon, welcher Sendezweig als Normalkomponente definiert wird (sinnvollerweise der Signalzweig mit der geringeren Anzahl von Unstetigkeiten). Mit $v(t)$ ist das Datensignal bezeichnet.

Die zusätzliche Phasenmodulation (um $\pi$) des Sendesignales ist einfach durch Umpolen während der auszuführenden Modulation von nur einem Kanal im Sender erreichbar.

Durch Rückmodulation des verschobenen Sendefrequenzbandes entstehen nach Ausfiltern der doppelten Spektralanteile (Tiefpässe) auf der Empfangsseite exakt zwei Kanäle, die der Normal- und der hilberttransformiterten Komponente des Sendesignales entsprechen.

Eine weitere Erläuterung des Verfahrens erfolgt nachstehend anhand von Zeichnungsfiguren. Es zeigen:

Fig. 1    einen bekannten Ansatz einer Einseitenbandmodulation eines reellen Datensignals $v(t)$;

Fig. 2    ein Blockschaltbild einer Anordnung zur Erzeugung eines Einseitenbandsignals x(t);

Fig. 3    eine alternative Anordnung zur direkten digitalen Erzeugung des Einseitenbandsignals x(t);

Fig. 4    eine Darstellung zur empfangsseitigen Rückwandlung des Einseitenbandsignals x(t) in seine Komponenten $v(t)$ und $\hat{v}(t)$;

Fig. 5 und 6    sende- bzw. empfangsseitige Maßnahmen zur Begrenzung des Sendespektrums duch Vorcodierung und Verwürfelung;

Fig. 7    eine Darstellung zur Detektierbarkeit von FSK-Signalen einer Dauer von Bruchteilen einer Sinusschwingung,

Fig. 8    eine AFSK-Demodulation mit geregelter AGC (automatic Gain Control)-Stufe;

Fig. 9    in der oberen Spur den Frequenzgang eines normalen Mittelungsfilters über eine Länge M=13 Werte und in der unteren Spur den Frequenzgang einer Zweifachkaskade mit gleicher Gesamtlänge;

Fig. 10 ein Blockschema einer Filterkaskade;

Fig. 11 das Übergangsverhalten für die Filteranordnungen, die den in Fig. 9 gezeigten Frequenzgängen zugrundeliegen;

Fig. 12 den prinzipiellen Aufbau eines PLL's als Tone Decoder;

Fig. 13 eine FSK-Demodulation mit PLL-Decodern,

Fig. 14 einen Sender für Codemultiplex, und

Fig. 15 einen Empfänger für Codemultiplex.

Zur Erläuterung der Erfindung dienen die nachstehenden Lösungsschritte a) bis f):

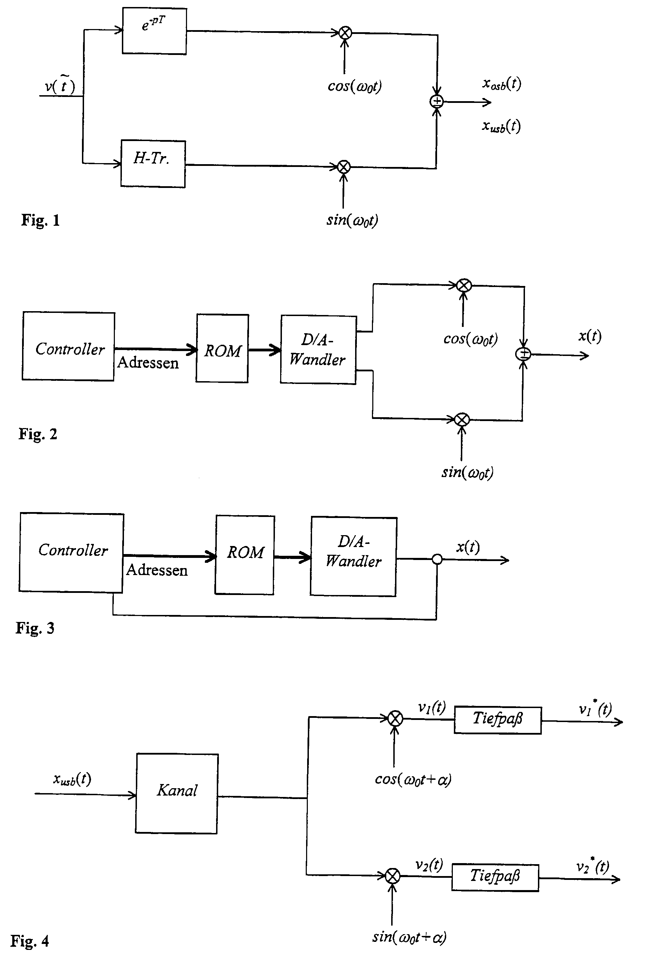

a) Wie in Fig. 1 dargestellt ist, wird ein Datensignal, z.B. eine kurz geschaltete Cosinusschwingung $v(\tilde{t})$, modellhaft im oberen Kanal geeignet verzögert und im unteren Kanal der Hilbert-Transformation unterworfen.

b) Beide Kanäle werden modellhaft mit zueinander orthogonalen Trägerschwingungen $\cos(\omega_0 t)$ und $\sin(\omega_0 t)$ multipliziert.

c) Durch Summation bzw. Subtraktion beider modulierten Kanäle entstehen modellhaft die Einseitenbandsignale $x_{OSB}(t)$ und $x_{USB}(t)$.

d) Bei Verwendung einer geschalteten kurzen Cosinusschwingung $a \cdot \cos(\omega_S t \pm \pi)$ mit der Beeinflussungsmöglichkeit von a (ASK), $\omega_S$ (FSK) und $\pm\pi$ (PSK) entsteht modellhaft für das ASK und FSK = AFSK-Signal

$$x_{USB}(t) = a \cdot \cos((\omega_0 - \omega_\nu)t)$$

bzw.

$$x_{OSB}(t) = a \cdot \cos((\omega_0 + \omega_\nu)t)$$

mit $\omega_\nu$ als die verschieden wählbaren Signalfrequenzen $\omega_S$ (FSK).

e) Die Hilberttransformation braucht also sendeseitig gar nicht gebildet werden, da bekannt ist:

$$H\{\cos\omega_S t\} = \sin\omega_S t$$

und

$$H\{\sin\omega_S t\} = -\cos\omega_S t$$

f) Damit reduziert sich die Sendesignalerzeugung auf eine Blockschaltbildstruktur nach Fig. 2 oder Fig. 3.

In den Figuren 2 und 3 ist jeweils ein Controller dargestellt, der einen Festwertspeicher (ROM) adressiert, dem ein D/A-Wandler nachgeschaltet ist.

Entsprechend der in Fig. 2 gezeigten Struktur können sinus- oder cosinusförmig verlaufende Signalpakete zur Bildung eines Mehrton-FSK-Signales verwendet werden, die beispielsweise durch Auslesen des Festwertspeiches und anschließender D/A-Wandlung generiert werden, wobei man durch versetzte Adressierung automatisch das dazu hilberttransformierte Signal erhält. Anstelle der in Fig. 2 gezeigten Modulation mit den Trägersignalen $\cos\omega_0 t$ und $\sin\omega_0 t$ kann auch per Software eine rein digitale Modulation entsprechend Fig. 3 erfolgen.

In Fig. 4 ist gezeigt, daß nach Übertragung des so gebildeten Einseitenbandsignales x(t) über einen Datenkanal, in Fig. 4 als Kanal bezeichnet, nach geeigneter Vorfilterung eine Aufteilung in zwei Signalzweige durch Rückmodulation mit orthogonalen Sinus- und Cosinusschwingungen erfolgt, welche gegenüber der Sendeträgerfrequenzen einen geringen Kreisfrequenzversatz $\Delta\omega_0$ und einen beliebigen Phasenversatz $\alpha$ aufweisen können. D. h. es ist keine Trägerfrequenzsynchronisation erforderlich, wie unten noch erläutert wird.

Nach Ausfilterung der doppelten Kreisfrequenzanteile hinter der Rückmodulation durch geeignete Tiefpässe (Fig. 4) entstehen die beiden Signalkomponenten

$$v_1^*(t) = \tfrac{1}{2}v(t) \cdot \cos\alpha - \tfrac{1}{2}\hat{v}(t) \cdot \sin\alpha$$

und

$$v_2^*(t) = \tfrac{1}{2}\hat{v}(t) \cdot \cos\alpha - \tfrac{1}{2}v(t) \cdot \sin\alpha,$$

wobei v(t) die reelle Sendefolge, $\hat{v}(t)$ die dazu Hilberttransformierte und $\alpha$ der Phasenversatz von Sende- zur Empfangsmodulationsfrequenz bedeutet.

Es werden also vorteilhaft ohne Einsatz der Hilbert-Transformation auf Sende- und Empfangsseite zwei zueinander hilberttransformierte Signalzweige im Empfänger erhalten. Das gilt vorteilhaft für beliebige Sendesignale v(t), wenn der Phasenversatz $\alpha$ von Sende- und Empfangsträgerfrequenz z. B. durch einen Costas- oder Squaring-Loop (Unsicherheit um $\pi$ ist erlaubt) ausgeregelt wird, denn für $\alpha = 0°$ wird

$$v_1^*(t) = \tfrac{1}{2}v(t); \; v_2^*(t) = \tfrac{1}{2}\hat{v}(t).$$

Wird zunächst nur ein Signal $v(t) = a \cdot \cos\omega_S t$ mit Variation der Amplitude a (ASK) und gleichzeitiger Kreisfrequenzumtastung $\omega_{S1}$, $\omega_{S2}$ ... $\omega_\nu$ (FSK) eingesetzt, so läßt sich wie bekannt die Variation der Amplitude a durch Bildung der Einhüllenden

$$z(t) = \sqrt{v(t)^2 + \hat{v}(t)^2}$$

demodulieren.

Die Demodulation der Kreisfrequenz $\omega_\nu$ kann

nach dem in DE 196 19 572 A1 beschriebenen Verfahren zu

$$\dot{\varphi}(t) = \frac{d}{dt} \arctan \frac{\hat{v}(t)}{v(t)}$$

erfolgen, ohne Einsatz der Hilbert-Transformation und für beide Modulationen ASK und FSK gleichzeitig.

Wird im Sendesignalmodell nur ein Kanal invertiert, bzw. bei der Realisierung nach Figur 3 das Signal $x_{USB}(t) = a \cdot \cos((\omega_0 + \omega_v)t)$ gebildet, so liegt eine PSK (Phasenmodulation) vor. Auch diese Modulation kann zusätzlich zu ASK und FSK eingesetzt werden und erhöht damit die Datenübertragungsrate. Das so gebildete Signal wird nachstehend als APFSK-Signal bezeichnet

Die geschilderte Vorgehensweise entspricht bei der Berechnung von $\dot{\varphi}(t)$ der Ermittlung der Draufsicht auf das Kurzzeitspektrum des FSK-Signales, und zwar ohne Umweg über die Berechnung von quadratischen Größen, wie es beispielsweise bei der Wigner-Verteilung und Derivaten davon erforderlich ist.

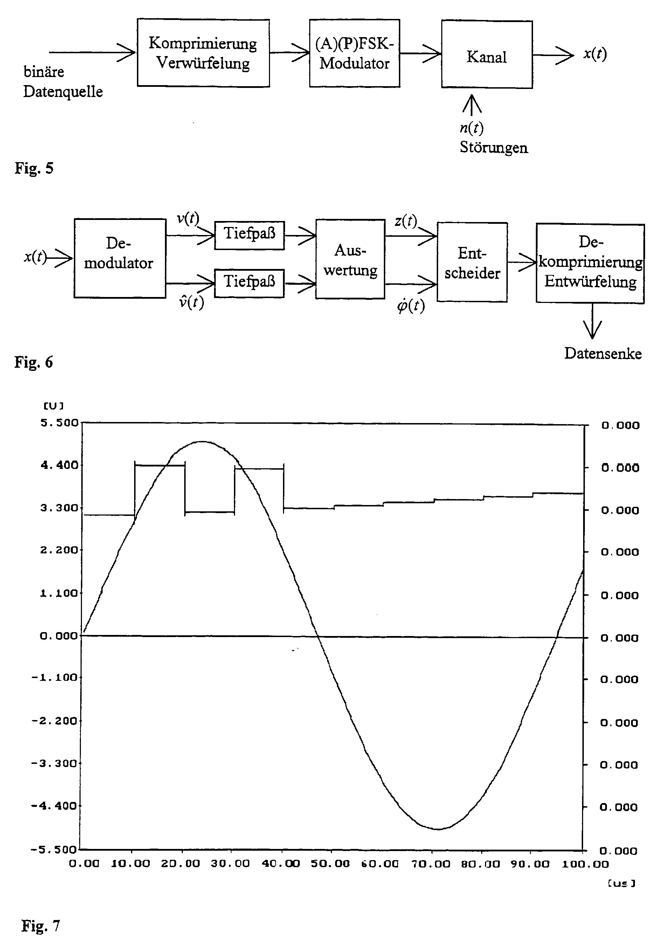

Je zufälliger die Amplitude und Frequenz (und die Phase) durch das Datensignal wechselnd stattfinden, umso begrenzter bleibt das Sendespektrum. Diese erzwungene „Zufälligkeit" kann vorteilhaft durch eine entsprechende Vorcodierung und Verwürfelung, wie es beispielhaft in Figur 5 und 6 für die Sende- bzw. Empfangsseite gezeigt wird, erreicht werden.

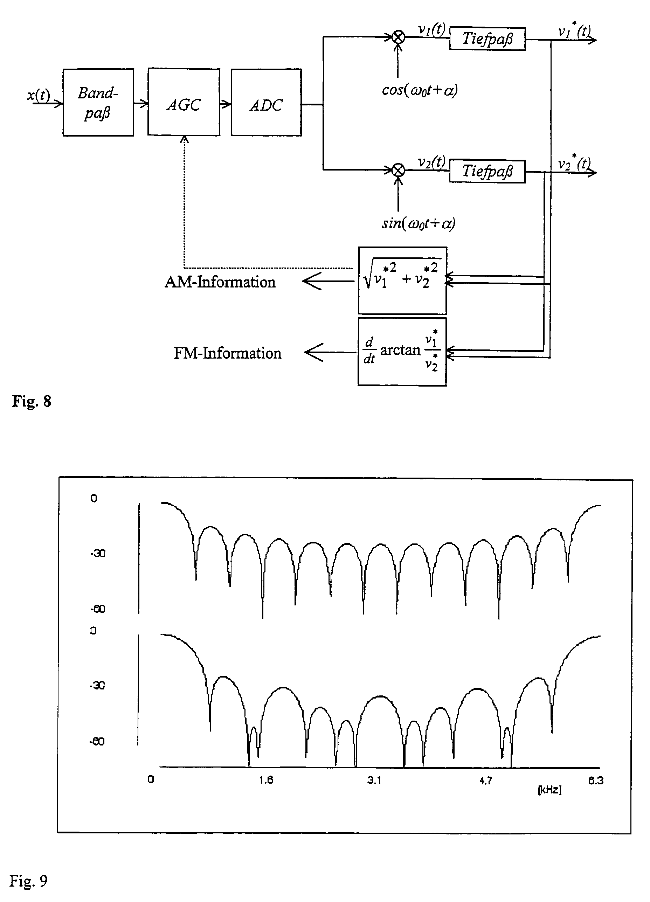

Durch die Einsparung der Hilbert-Transformation sowohl bei der Signalerzeugung als auch bei der Wiedergewinnung (Demodulation) des Datensignales ist es möglich, auch Bruchteile einer Sinusschwingung zur Informationsgewinnung zu benutzen, wie es beispielhaft in Figur 7 gezeigt ist. Fig. 7 zeigt eine Sinusschwingung und ein demoduliertes FSK-Signal mit Signaldauern von 1/10 Schwingungen.

Wird, wie schon erwähnt, das Sendesignal $v(t) = a \cdot \cos\omega_v t$ und $\hat{v}(t) = a \cdot \sin\omega_v t$ (AFSK-Signal) eingesetzt, so zeigen Berechnungen und Simulationen, daß bei der Demodulation mit einem um $\Delta\omega$ kreisfrequenzversetzten Träger, der zusätzlich eine Phasenverschiebung um $\alpha$ hat, eine Einhüllende unabhängig von $\Delta\omega$ und $\alpha$ erhalten wird zu

$$z(t) = \frac{a}{2} \cdot$$

Bei der Ermittlung der Momentankreisfrequenz $\dot{\varphi}(t)$ wird nach einigen Zwischenrechnungen das Ergebnis $\dot{\varphi}(t) = \omega_v + \Delta\omega$ erhalten. Die Momentankreisfrequenz ist also, bis auf den Trägerkreisfrequenzversatz $\Delta\omega$ direkt proprotional zu $\omega_v$; Phasendifferenzen $\alpha$ von Senderträgerfrequenz zu Empfangsträgerfrequenz spielen durch das differentielle Demoduationsverfahren keine Rolle.

In Fig. 8 ist dargestellt, daß das über den Datenkanal übertragene Einseitenbandsignal $x(t)$ zweckmäßigerweise vor der Rückmodulation einer Bandpaßfilterung zur Rausch- und Störbefreiung unterzogen wird. Zur Regelanpassung folgt eine AGC (Automatic Gain Control)-Stufe, die logarithmisch, normal geregelt oder über eine geeignet aufgebrachte Amplitudenmodulation, die über $z(t)$ detektiert werden kann, beeinflußt wird. Bandpaß und AGC können je nach Anwendungsfall auch in der Reihenfolge getauscht werden. Dann kann entweder erst eine Analog-Digitalwandlung folgen und rückmoduliert werden, s. Fig. 8, oder umgekehrt.

Zur Detektion der FM-Information, d.h. zur Bestimmung, wann welche $\omega_v$ gesendet wurden, sind für die schnelle und bandbreiteneffiziente Datenübertragung geeignete Tiefpässe vorzusehen.

Je nach Anforderung an schnelle Wechsel der einzelnen Modulationskreisfrequenzen $\omega_v$ und entsprechendes schnelles Detektieren, d.h. schnelles Übergangsverhalten der Sprungantwort, können niedergradige digitale IIR-Filter (Infinite Impulse Response), linearphasige FIR-Filter (Finite Impulse Response) oder geeignet kaskadierte Mittelungsfilter eingesetzt werden.

Insbesondere der letzte Systemtyp bietet vorteilhaften Einsatz für schnelles Einschwingverhalten.

Wird statt eines Mittelungsfilters über eine feste Länge M eine Aufteilung in eine Kaskadenanordung vorgenommen, so läßt sich die Rauschbefreiung der zu verarbeiteten Signale zugunsten eines schnellen Übergangsverhaltens beeinflussen.

In Fig. 9 ist in der oberen Spur der Frequenzgang eines normalen Mittelungsfilters über M=13 Werte, in der unteren Spur der Frequenzgang einer Zweifachkaskade mit gleicher Gesamtlänge dargestellt.

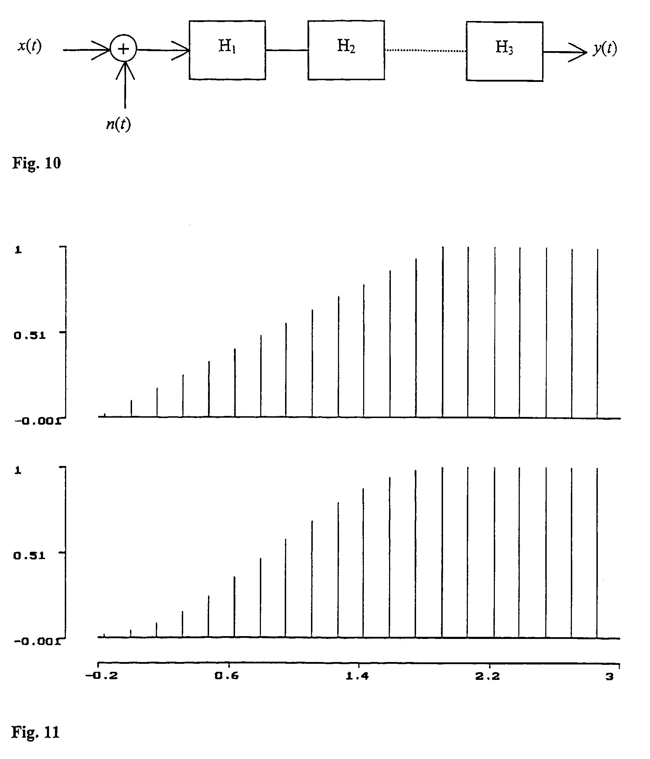

Das Übergangsverhalten für beide, in Fig. 9 dargestellte Fälle, ist in Fig. 11 zu sehen.

Der Endwert wird bei Kaskadierung von Teilfiltern schneller erreicht, evtl. zu ungunsten der Rauschbefreiung im dB-Bereich.

Für durch Rauschen gestörte Empfangssignale läßt sich das für die Optimierung notwendige Verfahren folgendermaßen erklären. Figur 10 zeigt ein Blockschaltbild mit dem Nutzsignal $x(t)$ und dem Störsignal $n(t)$, welches auf die Filterkaskade $H_1(f) \cdot H_2(f) \cdot \ldots \cdot H_n(f)$ im kontinuierlichen bzw. $H_1(z) \cdot H_2(z) \cdot \ldots \cdot H_n(z)$ im diskreten Fall gelangt.

Bei Störung durch mittelwertfreies Rauschen, der Einfachheit als weiß angenommen, läßt sich wegen der Linearität der Systeme zunächst die Reaktion für n(t) am Ausgang, die Filterautokorrelation $\Phi_{hh}(\tau)$ bestimmen. Es ist

$$\sigma_y^2 = \frac{N_0}{2} \cdot \Phi_{hh}(\tau = 0)$$

mit

$$\Phi_{hh}(\tau) = \int_{-\infty}^{\infty} (h(t) \cdot h(t + \tau)) dt$$

wenn h(t) die Impulsantwort der Kaskade darstellt und

$$\frac{N_0}{2}$$

die zweiseitige Rauschleistungsdichte angibt.

Für den Sonderfall $\tau=0$ vereinfacht sich die Beziehung zu

$$\Phi_{hh}(\tau = 0) = \int_{-\infty}^{\infty} (h^2(t)) dt$$

Somit wird vom Rauschen (Störung) am Ausgang der Kaskade der Wert

$$\sigma_y^2 = \frac{N_0}{2} \cdot \int_{-\infty}^{\infty} (h^2(t)) dt$$

wirksam.

Andererseits soll die Filterkaskade z.B. bei sprungförmigen Änderungen des Nutzsignals $x(t)$ möglichst schnell auf den neuen Eingangswert einschwingen, beschreibbar durch die Sprungantwort der Filterkaskade und einen vorgebbaren Wert $K$ mit $K \leq 1$ als Bruchteil des neuen stationären Endwertes, z.B. 0,95. Die dazu erforderliche zu berechnende Zeit sei $t_{an}$. Schnelles Einschwingen und gute Rauschbefreiung sind bezüglich der Filteraufgabe gegenläufige Forderungen.

Es wird der Gütefaktor $F = \sigma_y^2 \cdot t_{an}$ definiert, den man bei gewählter Filterstruktur bezüglich der vorkommenden Parameter optimieren kann. Im vorher gezeigten Beispiel sind zwei gleitende digitale Mittelungsfilter optimiert worden, wobei die Rauschbefreiung wie in Figur 9 unten zu sehen ist, günstiger wird und das Einschwingverhalten, wie in Figur 11 gezeigt, auch noch geringfügig verbessert wird.

Für viele Teilfilter in Kaskade strebt die Impulsantwort gegen einen gaußförmigen Verlauf. Ein solches Verhalten weist bekannterweise das beste Zeit-Bandbreiteprodukt auf.

Eine Möglichkeit der Berechnung von $z(t)$ und $\dot{\varphi}(t)$ für die Signalauswertung für Amplituden- und Frequenzänderungen $\omega_v$ besteht darin, den APU-Teil (Arithmetik-Processor) einer heute gängigen CPU (z.B.

Pentium-Prozessor) zu verwenden.

Eine zweite Möglichkeit besteht darin, den bekannten CORDIC-Algorithmus einzusetzen, der z.B. schon in „Ausgewählte Arbeiten über Nachrichtensysteme, hrsg H: W. Schüßler, Nr. 22 1976" und in gleicher Reihe Nr. 70, 1989 veröffentlicht wurde. Eine dritte Möglichkeit ergibt sich durch den Einsatz paralleler PLL-Filterbänke.

In Fig. 3 und den vorhergehenden Erklärungen wurde gezeigt, daß ein FSK-Sendesignal in Einseitenbanddarstellung durch die Form
$x(t) = a \cdot \cos[(\omega_0 \pm \omega_v)t]$ einfach erzeugt werden kann. Neben der Auswertung der Amplitudeninformation und der Frequenz / Phasenumtastung, wie beschrieben, ergibt sich eine weitere Möglichkeit der Demodulation, die nachstehend behandelt wird.

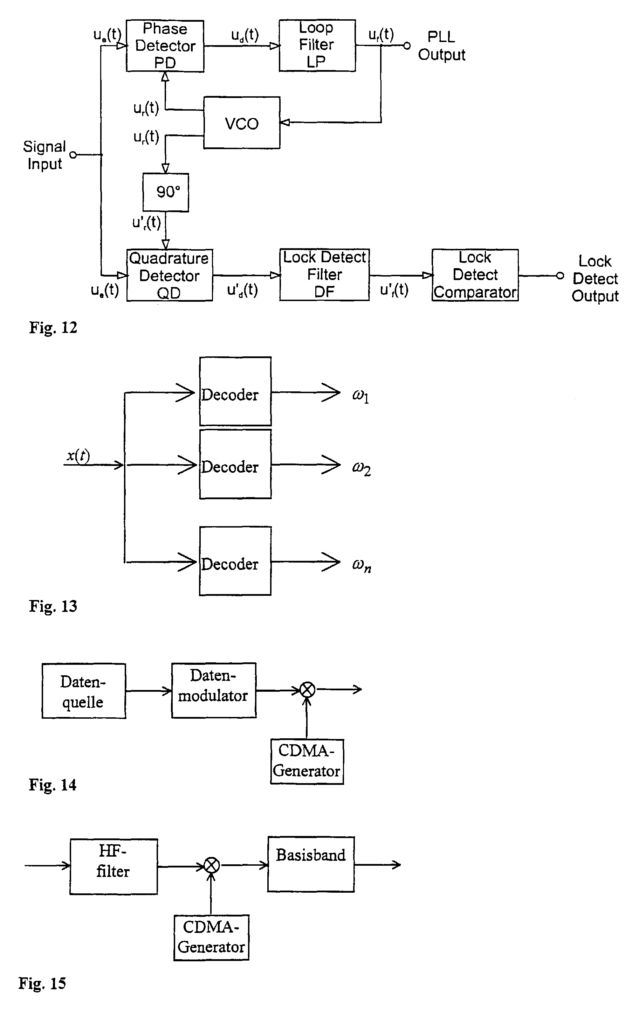

Das bekannte Strukturbild eines PLLs zur Frequenzsynchronisation oder zur FM-Demodulation wird um einen Quadraturkanal, wie in Fig. 12 dargestellt, erweitert. Wenn der PLL auf eine im Haltebereich befindliche Kreisfrequenz eingerastet ist, zeigt das der Lock Detect Comparator durch maximale Spannung an.

Durch entsprechende Dimensionierung des PLL gelingt es, die Detektion einer vorhandenen Kreisfrequenz $\omega_v$ selbst bei nur Vorhandensein von 2 bis 3 Schwingungen vorzunehmen.

Damit ist eine parallele PLL-Struktur zur Detektion eines Multiton-FSK-Signales realisierbar, s. Fig. 13, wobei jeder Decoderblock dem Strukturbild in Fig. 12 entsprechend aufgebaut ist.

Der weitere vorteilhafte Einsatz paralleler PLL-Filterbänke zur FSK-Demodulation besteht darin, daß trotz des normalen Bandpaßverhaltens eines einzelnen PLL-Kreises die Störimpulsantwort wesentlich kürzer ist, als sie ein Bandpaß mit der äquivalenten Rauschbandbreite besitzt. Diese Tatsache ist bereits durch umfangreiche Untersuchungen nachgewiesen und verbessert damit den Einsatz für die schnelle und bandbreiteneffiziente Datenübertragung mit FSK-Signalen.

Bei der Auswertung der Spektren von einem multifrequenten FSK- oder AFSK-Signal war festgestellt worden, daß bei Hinzunahme weiterer Frequenzen und zusätzlicher Modulationen (AFSK statt FSK) das Sendespektrum mehr in die Höhe und weniger in die Breite geht.

Dieser Effekt ist umso ausgeprägter, je zufälliger der Datenstrom und damit Frequenz- und Amplitudenwechsel vorgenommen werden. Diese Zufälligkeit kann durch bekannte Maßnahmen, wie Datenkomprimierung , Verwürfelung etc. unterstützt werden.

In den Fig. 5 und 6 sind solche Maßnahmen statt der üblichen Quellencodierung eingesetzt.

Nach der Demodulation und der Rauschfilterung auf der Empfangsseite wird diese Verwürfelung durch die inversen Operationen wieder rückgängig gemacht.

Wird bei gewählten Amplituden und Kreisfrequenzen die zur Verfügung stehende Übertragungsbandbreite nur teilweise ausgenutzt, so kann das Sendespektrum mit Methoden der spektralen Spreizungstechnik, beispielsweise mit hochgetakteten Pseudo-Noise-Folgen und Derivaten aufgeweitet werden (CDMA = Code Division Multiple Access). Figuren 14 und 15 zeigen eine entsprechende beispielhafte Struktur einer solchen Anordnung.

Zur Codesynchronisation können vorteilhaft bekannte Strukturen wie der Delay-Locked-Loop (DLL) eingesetzt werden.

Ein weiterer Vorteil spektral gespreizter Signale besteht darin, daß man mehrere Datenströme über den gleichen Kanal übertragen kann und diese durch Anwendung verschiedener Spreizungs- und Schlüsselfolgen eindeutig in verschiedenen Empfängern wieder entschlüsseln kann (Mehrfachausnutzung eines Datenkanals).

**Patentansprüche**

1. Verfahren zur bandbreiteneffizienten Mehrfrequenz-Datenübertragung, bei dem

    a) die sendeseitige Bildung eines zu übertragenden Mehrfrequenz-Einseitenbandsignals $(x(t))$ durch eine frei programmierbare Zuordnung einer jeweiligen Kreisfrequenz $(\omega_v)$ zu einem Datensignal $(v(t))$ erfolgt, wobei

    a1) das Datensignal $(v(t))$ durch seine Amplitude und/oder seine Frequenz und/oder seine Phase gekennzeichnet ist,
    a2) durch Addition der Kreisfrequenz $(\omega_v)$ zu einer gewählten Trägerkreisfrequenz $(\omega_0)$ eine Anpassung an den jeweiligen Datenkanal erfolgt, und
    a3) bei fehlenden Daten die Frequenz des Sendesignals $(x(t))$ der gewählten Trägerkreisfrequenz $(\omega_0)$ entspricht, und

    b) empfangsseitig das empfangene Signal $(x(t))$ in einen ersten und einen zweiten Kanal aufgeteilt wird, und

    b1) im ersten Kanal eine Modulation mit einem Modulationssignal der Form $\cos((\omega_0+\Delta\omega)t+\alpha)$, bzw. im zweiten Kanal mit einem Modulationssignal der Form $\sin((\omega_0+\Delta\omega)t+\alpha)$ erfolgt, wobei bedeuten:

    $\omega_0 =$  Trägerfrequenz
    $\Delta\omega =$  maximal $10^{-4} \cdot \omega_0$
    $\alpha =$  eine beliebige Phasenverschiebung zwischen Trägersignal und Modulationssignal,

    b2) in beiden Kanälen nach der Modulation mittels geeignet gewählten Tiefpässen die doppeltfrequenten Anteile eliminiert werden, wodurch zwei zueinander orthogonale Signale $(v_1^*(t), v_2^*(t))$ gebildet werden, die als Real- bzw. Imaginärteil eines komplexen Zeitsignals $(z(t))$ interpretiert werden, durch deren geometrische Addition der Betrag $(|z(t)|)$ eines Zeigers in der komplexen Ebene erhalten wird, der sich mit einem Winkel $(\varphi(t))$ in der komplexen Ebene dreht, und die Ableitung des Winkels $(\varphi(t))$ nach der Zeit der jeweiligen Kreisfrequenz $(\omega_v)$ entspricht, die durch eine - der sendeseitig freiprogrammierten Zuordnung entsprechende - inverse Operation in das Datensignal $(v(t))$ umgewandelt wird.

2. Verfahren nach Anspruch 1, dadurch gekennzeichnet, daß zur Übertragung von Datensignalen in Form sinusförmiger kurz und hart getakteter Datenpakete sendeseitig die Erzeugung des Mehrfrequenz-Einseitenbandsignals $(x(t))$ durch eine digitale Modulation unter Verwendung eines Controllers und eines Festwertspeichers mit nachgeschaltetem D/A-Wandler erfolgt, wobei die Ansteuerung des Controllers und damit die Erzeugung des Sendesignals $(x(t))$ durch ein im Festwertspeicher gespeichertes Sinussignal erfolgt, womit die momentane Frequenz des Datensignals $(v(t))$ zur Frequenz eines Trägersignals addiert bzw. von dieser subtrahiert wird.

3. Verfahren nach Anspruch 1, dadurch gekennzeichnet, daß zur Bildung des Sendesignals $(x(t))$ außer der Frequenz auch die Amplitude des Trägersignals beeinflußt wird und empfangsseitig die Amplitudenänderung aus der Ableitung des empfangsseitig gebildeten Betrags $(|z(t)|)$ des Zeigers in der komplexen Ebene rekonstruiert wird.

$e^{-pT}$

$v(\tilde{t})$

$cos(\omega_0 t)$

$x_{osb}(t)$

$x_{usb}(t)$

H-Tr.

$sin(\omega_0 t)$

**Fig. 1**

Controller

Adressen

ROM

D/A-Wandler

$cos(\omega_0 t)$

$x(t)$

$sin(\omega_0 t)$

**Fig. 2**

Controller

Adressen

ROM

D/A-Wandler

$x(t)$

**Fig. 3**

$x_{usb}(t)$

Kanal

$v_1(t)$

Tiefpaß

$v_1^*(t)$

$cos(\omega_0 t + \alpha)$

$v_2(t)$

Tiefpaß

$v_2^*(t)$

$sin(\omega_0 t + \alpha)$

**Fig. 4**

Fig. 5

binäre
Datenquelle

Komprimierung
Verwürfelung

(A)(P)FSK-
Modulator

Kanal

$x(t)$

$n(t)$
Störungen

Fig. 6

$x(t)$

Demodulator

$v(t)$

Tiefpaß

$\hat{v}(t)$

Tiefpaß

Auswertung

$z(t)$

$\dot{\varphi}(t)$

Entscheider

Dekomprimierung
Entwürfelung

Datensenke

Fig. 7

**Fig. 8**

Fig. 9

Fig. 10

Fig. 11

Fig. 12

Fig. 13

Fig. 14

Fig. 15